# EUROPÄISCHE PATENTANMELDUNG

(11) **EP 3 700 056 A1**
(43) Veröffentlichungstag der Anmeldung: **26.08.2020**
(21) Anmeldenummer: 20154239.6
(22) Anmeldetag: 29.01.2020
(51) Int. Cl.: H02J 15/00, B25J 9/00, H02J 50/10, H02J 50/30

(54) **PROZESSEINRICHTUNG UND PROZESSANLAGE**

(30) Priorität: 25.02.2019 DE 102019202495
(71) Anmelder: Robert Bosch GmbH, 70442 Stuttgart (DE)
(72) Erfinder: Vorderer, Marian Marcel, 71277 Rutesheim (DE); Betzitza, Thomas, 71272 Renningen (DE); Schroeck, Sebastian, 71263 Weil Der Stadt (DE)

(57) **Zusammenfassung**

Prozesseinrichtung 2a, 2b für eine wandlungsfähige Prozessanlage 1, wobei die Prozessanlage 1 einen Anlagenbereich 3 aufweist, wobei die Prozesseinrichtung 2a, 2b im Anlagenbereich 3 reversibel positionierbar ist und zur Durchführung einer Prozessfunktion ausgebildet ist, mit eine Fixiereinheit 10 zur rasterlosen Fixierung der Prozesseinrichtung 2a, 2b im Anlagenbereich 3 aufweist, mit einer Energieversorgungseinheit 7 zur kabellosen Energieversorgung der Prozesseinrichtung 2a, 2b.

## Beschreibung

### Stand der Technik

Die Erfindung betrifft eine Prozesseinrichtung für eine wandlungsfähige Prozessanlage mit den Merkmalen des Oberbegriffs nach Anspruch 1 sowie eine Prozessanlage.

Aufgrund immer kürzerer Innovationszyklen werden neue Technologien zunehmend schneller in neue Produktideen umgesetzt. Zur Herstellung solcher Produkte werden häufig Prozessanlagen eingesetzt. Die Prozessanlagen weisen oftmals mehrere Prozesseinrichtungen auf, die beim Umstellen von einer Produktidee zu einer anderen Produktidee neu angeordnet und/oder kombiniert werden müssen. Daher müssen Aufbau und Umbau solcher Prozessanlagen sehr individuell gestaltbar sein und mit geringem Konstruktionsaufwand modifizierbar sein.

Die Druckschrift DE 10 2016 204 174 A1, die wohl den nächstkommenden Stand der Technik bildet, beschreibt eine Automatisierungsanlage mit mindestens einem Funktionsmodul und mit mindestens einer Auswerteeinheit, wobei das mindestens eine Funktionsmodul in dem Anlagenbereich angeordnet ist und das Funktionsmodul eine Sensoreinheit zum Aufnehmen von Umgebungsdaten aufweist, wobei eine Auswerteeinheit zum Bestimmen einer absoluten Position des Funktionsmoduls in dem Anlagenbereich auf Basis der Umgebungsdaten ausgebildet ist.

### Offenbarung der Erfindung

Im Rahmen der Erfindung wird eine Prozesseinrichtung mit den Merkmalen des Anspruchs 1 vorgeschlagen. Ferner wird eine Prozessanlage mit den Merkmalen des Anspruchs 14 vorgeschlagen. Bevorzugte und/oder vorteilhafte Ausführungsformen der Erfindung ergeben sich aus den Unteransprüchen, der nachfolgenden Beschreibung sowie den beigefügten Figuren.

Erfindungsgemäß wird eine Prozesseinrichtung für eine wandlungsfähige Prozessanlage vorgeschlagen. Die Prozessanlage ist insbesondere zur Fertigung eines Produkts, zur Bearbeitung, zur Kommissionierung, Verpackung, Prüfung und/oder zum Vermessen des Produktes ausgebildet. Beispielsweise bildet die Prozessanlage eine Fertigungsanlage. Die Prozesseinrichtung kann Teile einer mehrstufigen Herstellung, Bearbeitung und/oder Vermessung des Produktes übernehmen. Wandlungsfähig bezüglich der Prozessanlage meint insbesondere, dass mittels der Prozessanlage unterschiedliche Produkte gefertigt, bearbeitet und/oder vermessen werden können, beispielsweise nach einem Umbau oder einer Umprogrammierung der Prozessanlage und/oder der Prozesseinrichtung. Der Umbau und/oder das Umprogrammieren soll im Speziellen ohne großen konstruktiven, programmiertechnischen und/oder mechanischen Aufwand erfolgen, beispielsweise durch Verschieben der Prozesseinrichtungen.

Die Prozessanlage weist einen Anlagenbereich auf. Der Anlagenbereich ist insbesondere ein Abschnitt, in dem das Produkt hergestellt, bearbeitet, gehandhabt und/oder vermessen werden kann. Der Anlagenbereich kann Teil einer Fertigungs-, Produktions- oder Bearbeitungslinie sein. Der Anlagenbereich ist insbesondere ein Flächen- oder Volumenabschnitt. Der Anlagenbereich weist insbesondere einen Anlagenboden auf, auf welchem die Prozesseinrichtungen fußen und/oder befestigbar beziehungsweise verschiebbar sind. Die Prozesseinrichtung ist im Anlagenbereich reversibel positionierbar und/oder orientierbar. Reversibel positionierbar meint insbesondere, dass die Prozesseinrichtung von einer Position im Anlagenbereich zu einer anderen Position im Anlagenbereich gebracht, geschoben und/oder angeordnet werden kann, und beispielsweise dort weiter betreibbar ist. Im Speziellen meint es, dass die Prozesseinrichtung an beliebigen Orten des Anlagenbereichs betreibbar ist.

Die Prozesseinrichtung ist zur Durchführung einer Prozessfunktion ausgebildet. Die Prozessfunktion ist beispielsweise eine mechanische, eine elektrische oder pneumatische Funktion und/oder ein dergleichen Arbeitsschritt. Die Prozessfunktion kann ein Bearbeiten, ein Verarbeiten, Transportieren oder Vermessen eines Produkts, einer Produktvorstufe oder eines Zwischenproduktes sein. Beispielsweise ist und/oder umfasst die Prozessfunktion ein Bohren, Schrauben oder Vermessen. Im Speziellen kann die Prozesseinrichtung zur Durchführung mehrerer Prozessfunktionen ausgebildet sein. Besonders bevorzugt ist es, dass die Prozesseinrichtungen miteinander im Eingriff stehen können und beispielsweise gemeinsam an einem Produkt, Produktvorstufe oder Zwischenprodukt Prozessfunktionen durchführen können.

Die Prozesseinrichtung weist eine Fixiereinheit auf. Die Fixiereinheit dient der rasterlosen Fixierung der Prozesseinrichtung im Anlagenbereich. Beispielsweise kann mittels der rasterlosen Fixierung die Prozesseinrichtung am Boden des Anlagenbereiches fixiert werden. Als rasterlose Fixierung wird insbesondere verstanden, dass die Prozesseinrichtung ungerastert im Anlagenbereich anordenbar ist und beispielsweise keine vorgegebenen Positionen im Anlagenbereich vorgesehen sind, an denen die Prozesseinrichtung fixierbar wäre. Mittels der rasterlosen Fixierung ist die Prozesseinrichtung auf die entsprechenden Aufgaben in der Prozessanlage genauer anpassbar und/oder einsetzbar.

Die Prozesseinrichtung weist eine Energieversorgungseinheit auf. Die Energieversorgungseinheit dient der Versorgung der Prozesseinrichtung mit Energie, insbesondere, um die Prozessfunktion durchführen zu können. Die Energieversorgungseinheit kann zur Bereitstellung und/oder Speicherung von elektrischer, mechanischer oder pneumatischer Energie ausgebildet sein. Die Energieversorgungseinheit ist zur kabellosen Energieversorgung der Prozesseinrichtung. Kabellos meint in diesem Zusammenhang insbesondere, dass die Prozesseinrichtung gegenüber der Umgebung in der Prozessanlage nicht mit Kabeln zur Energieversorgung angebunden ist. In der Prozesseinrichtung selbst kann eine Verkabelung vorgesehen sein, ohne gegen das Merkmal der kabellosen Energieversorgung in diesem Sinne zu verstoßen. Im Speziellen meint kabellos, dass der Betrieb der Prozesseinrichtung bei der Durchführung der Prozessfunktion kabellos sein kann, wobei zu Ladezwecken die Energieversorgungseinheit zeitweise und/oder kurzzeitig mit einem Kabel angebunden sein kann.

Der Erfindung liegt die Überlegung zugrunde, dass zur Bereitstellung einer wandlungsfähigen Prozessanlage mit mehreren Prozesseinrichtungen neben der rasterlosen Fixierung im Anlagenbereich die Wandlungsfähigkeit gesteigert werden kann, indem eine kabellose Energieversorgung der Prozesseinrichtung möglich ist. Damit wird eine freie Anordnung der Prozesseinrichtungen ohne Störkontur wie beispielsweise Kabel ermöglicht. Ferner ist es dadurch möglich, die Prozesseinrichtung vereinfachter austauschen zu können, insbesondere, weil Steck- und Schraubverbindungen wegfallen, keine Verkabelung vorliegt und keine Begrenzung der Anordnung durch eine Kabellänge einschränkend wirkt.

Optional ist es vorgesehen, dass die Prozessanlage mindestens eine Energieliefereinheit zur Energieübertragung und kabellosen Kopplung mit der Energieversorgungseinheit aufweist. Die Energieliefereinheit und die Energieversorgungseinheit können beispielsweise als Schnittstelle und Gegenschnittstelle aufgefasst werden. Die Kopplung zwischen Energieliefereinheit und Energieversorgungseinheit ist kabellos, wobei diese Verbindung dauerhaft, zeitweise und/oder vorübergehend ausgebildet sein kann. Beispielsweise erfolgt die kabellose Kopplung zwischen Energieversorgungseinheit und Energieliefereinheit nur zu Zeitpunkten, bei denen eine Energieversorgung und/oder eine Energieübertragung stattfinden soll, beispielsweise bei Pausen der Prozesseinrichtung, bei Standzeiten oder zu Ladezeitpunkten, beispielsweise nachts. Die Energieliefereinheit in der Prozessanlage kann flächig ausgebildet sein. Beispielsweise ist die Energieliefereinheit im Boden der Prozessanlage angeordnet. Vorzugsweise ist eine Vielzahl an Energieliefereinheiten in der Prozessanlage vorgesehen, sodass Prozesseinrichtungen an vielen und/oder allen Bereichen in der Prozessanlage betrieben werden können und mit Energie von der Energieliefereinheit versorgt werden können. Besonders bevorzugt ist es, dass die Prozessanlage übergreifen und/oder überall, beispielsweise flächig, mit der Energieliefereinheit versehen ist.

Besonders bevorzugt ist es, dass die Energieübertragung eine kabellose und/oder kontaktlose Leistungsübertragung für elektrische Energie umfasst. Insbesondere umfasst die Energieübertragung eine induktive Energieübertragung, beispielsweise basierend auf elektromagnetischen Feldern. Die induktive Energieübertragung ist im Speziellen eine Nahfeldübertragung. Beispielsweise ist die induktive Energieübertragung mittels einer induktiven Kopplung zwischen Energieliefereinheit und Energieversorgungseinheit realisiert. Beispielsweise umfassen dazu Energieliefereinheit und Energieversorgungseinheit jeweils mindestens eine Spule zur induktiven Kopplung. Im Speziellen kann die Nahfeldübertragung beispielsweise durch eine resonant-induktive Kopplung realisierbar sein. In einer speziellen Ausgestaltung kann die induktive Energieübertragung ferner als eine Fernfeldübertragung ausgebildet sein und beispielsweise elektromagnetische Wellen zur Energieübertragung verwenden. Eine Ausgestaltung der Erfindung sieht ebenso vor, dass die Energieübertragung mittels einer kapazitiven Kopplung erfolgt. Die kapazitive Kopplung ist insbesondere zwischen Energieliefereinheit und Energieversorgungseinheit realisiert und/oder realisierbar. Dieser Ausgestaltung liegt die Überlegung zugrunde, eine besonders energieeffiziente Energieversorgung zu ermöglichen.

Eine Ausgestaltung der Erfindung sieht vor, dass die Energieübertragung eine fotoelektrische Energieübertragung umfasst. Beispielsweise umfasst dazu die Energieversorgungseinheit eine fotoelektrische Platte, beispielsweise eine Fotodiode oder Photovoltaik-Elemente. Durch Einstrahlung von künstlichem Licht, beispielsweise eines Lasers, oder durch Ausnutzen der natürlichen Beleuchtung, Sonne oder Industriebeleuchtung, kann die Prozesseinrichtung drahtlos und/oder kabellos mit Energie versorgt werden. Beispielsweise ist es mittels dieser Ausgestaltung insbesondere möglich, die Prozesseinrichtung dauerhaft mit Energie kabellos zu versorgen, sofern Licht vorhanden ist.

Insbesondere ist es vorgesehen, dass die Prozesseinrichtung und/oder die Energieversorgungseinheit einen Energiespeicher aufweist. Der Energiespeicher ist ausgebildet, Energie, elektrische, mechanische oder pneumatische Energie speichern zu können. Im Speziellen ist es vorgesehen, dass der Energiespeicher mittels der Energieliefereinheit mit Energie versorgt werden kann und so beispielsweise aufladbar ist. Die Aufladung des Energiespeichers kann in einer Ladestation erfolgen, alternativ erfolgt das Laden des Energiespeichers beispielsweise im Betrieb der Prozesseinrichtung mittels der kabellosen Kopplung, insbesondere durch die Kopplung mit der Energieliefereinheit.

Besonders bevorzugt ist es, dass der Energiespeicher einen Druckluftspeicher aufweist. Beispielsweise wird der Druckluftspeicher in Ladestationen mit Pressluft versorgt. Beispielsweise weist der Energiespeicher dazu einen Druckspeicher in Form eines Windkessels auf. Insbesondere ist es möglich, Pressluft mit einem Druck zwischen mindestens fünfzig bis eintausend Bar speichern zu können. Die im Druckluftspeicher gespeicherte Pressluft und/oder pneumatische Energie kann von der Prozesseinrichtung beispielsweise in mechanische, elektrische oder anderweitige Energieformen gewandelt werden und/oder zur Durchführung der Prozessfunktion genutzt werden.

Besonders bevorzugt ist es, dass der Energiespeicher zur Speicherung elektrischer Energie ausgebildet ist. Beispielsweise umfasst der Energiespeicher dazu einen Kondensator, im Speziellen einen Superkondensator, eine Batterie, einen Akkumulator, beispielsweise einen Polymerakkumulator. Im Speziellen kann es vorgesehen sein, dass zur Speicherung der elektrischen Energie eine Brennstoffzelle vorgesehen ist, wobei die Prozesseinrichtung zur Speicherung von Wasserstoff ausgebildet ist, um die Brennstoffzelle betreiben zu können. Der Energiespeicher zur Speicherung mit elektrischer Energie ist insbesondere zur induktiven und/oder drahtlosen Ladung ausgebildet, beispielsweise zum drahtlosen und/oder induktiven Laden mittels der Energieliefereinheit. Dieser Ausgestaltung liegt die Überlegung zugrunde, die Prozesseinrichtung gegebenenfalls auch in Anlagenbereichen der Prozessanlagen nutzen zu können, bei der zeitweise und/oder generell keine drahtlose und/oder kabellose Kopplung mit einer Energieliefereinheit möglich ist.

Eine Ausgestaltung der Erfindung sieht vor, dass der Energiespeicher zur Speicherung von mechanischer Energie ausgebildet ist. Der Energiespeicher zur Speicherung von mechanischer Energie kann zur Speicherung von kinetischer und/oder potentieller Energie ausgebildet sein. Beispielsweise umfasst der Energiespeicher dazu ein Schwungrad beziehungsweise einen Schwungradspeicher. Ferner kann der Energiespeicher zur Speicherung mechanischer Energie eine Feder zur Speicherung von Spannenergie aufweisen. Dieser Ausgestaltung liegt beispielsweise die Überlegung zugrunde, kostengünstige Energiespeicher in Prozesseinrichtungen verwenden zu können.

Eine Ausgestaltung der Erfindung sieht vor, dass die Fixiereinheit zur Fixierung der Prozesseinrichtung im Anlagenbereich basierend auf einer elektrischen, magnetischen und/oder elektromagnetischen Wechselwirkung ausgebildet ist. Beispielsweise ist dazu der Boden des Anlagenbereiches magnetisch ausgebildet und die Prozesseinrichtung weist einen Magneten zur magnetischen Kopplung auf. Die Kopplung kann ferner basierend auf einer elektrischen Wechselwirkung sein, beispielsweise elektrostatischen oder elektrodynamischen Wechselwirkung. Dieser Ausgestaltung liegt die Überlegung zugrunde, eine Möglichkeit der rasterlosen Fixierung im Anlagenbereich bereitzustellen, welche energieeffizient ausgebildet ist und beispielsweise zur Fixierung Energie der Energieversorgungseinheit genutzt werden kann. Insbesondere ist die magnetische, elektrische oder elektromagnetische Fixierung abschaltbar, beispielsweise, wenn die Fixierungseinheit vom Strom und/oder der Stromversorgung abgeschnitten wird.

Alternativ und/oder ergänzend ist es vorgesehen, dass die Fixiereinheit zur mechanischen und/oder zur vakuumbasierten Fixierung ausgebildet ist. Beispielsweise kann die Fixierungseinrichtung ausgebildet sein, die Prozesseinrichtung im Anlagenbereich und/oder auf dem Boden des Anlagenbereiches fest- und/oder anzusaugen. Dabei kann eine aktive Vakuumgenerierung beispielsweise mittels einer Saugpumpe vorgesehen sein, alternativ und/oder ergänzend kann eine Fixierung mittels Saugnäpfen vorgesehen sein. Eine mechanische Fixierung kann beispielsweise als ein Verspannen ausgebildet sein.

Eine Ausgestaltung der Erfindung sieht vor, dass die Prozesseinrichtung eine Datenübertragungseinheit zum drahtlosen Austausch von Daten aufweist. Die Datenübertragungseinheit kann zur Funkübertragung mittels elektromagnetischen Wellen und insbesondere auch mittels optischer Wellen ausgebildet sein. Beispielsweise ist der drahtlose Austausch mittels einer Funkverbindung oder einer Infrarotverbindung möglich. Der Datenaustausch mittels der Datenübertragungseinheit erfolgt vorzugsweise zwischen der Prozesseinrichtung und der Prozessanlage, beispielsweise einer Steuerung der Prozessanlage. Ferner kann ein drahtloser Datenaustausch mittels der Datenübertragungseinheit auch zwischen zwei oder mehreren Prozesseinrichtungen vorgesehen sein. Dieser Ausgestaltung liegt die Überlegung zugrunde, eine Prozesseinrichtung bereitzustellen, die flexibel und rasterlos im Anlagenbereich anordenbar ist und eine Datenübertragung trotzdem gewährleistet ist.

Besonders bevorzugt ist es, dass die Prozesseinrichtung ein Arbeitsmodul und/oder ein Produktionsmodul bildet. Beispielsweise ist ein Arbeits- und/oder Produktionsmodul ein Modul, das ausgebildet ist, einen Arbeitsschritt, einen Produktionsschritt und/oder einen Messschritt an einem Produkt, einem Gegenstand, einem Vorprodukt oder Zwischenprodukt durchzuführen. Die Arbeits- und/oder Produktionsmodule sind insbesondere ausgebildet, mechanische Arbeitsschritte, wie Bohren, Bewegen und/oder Ähnliches durchführen zu können. Ein Arbeits- und/oder Produktionsmodul ist insbesondere ein Modul, dessen Prozessfunktion eine aktive Bewegung umfasst. Beispielsweise ist die Prozesseinrichtung im Speziellen eine Bohrstation, eine Sägestation, eine Fräs- oder Schweißstation in einer Fertigungsanlage, wobei die Fertigungsanlage die Prozessanlage bildet.

Einen weiteren Gegenstand der Erfindung bildet eine Prozessanlage mit mindestens einer Prozesseinrichtung wie vorher beschrieben. Die Prozessanlage ist insbesondere eine Fertigungs-, eine Produktions- und/oder eine Messanlage, insbesondere in der produzierenden Industrie. Die Prozesseinrichtung ist ausgebildet, mindestens einen Arbeitsschritt der Prozessanlage mittels der Prozessfunktion durchführen zu können. Insbesondere können eine Mehrzahl an Prozesseinrichtungen vorgesehen sein, die zusammenwirkend, interagierend, zeitgleich oder nacheinander Prozessfunktionen und/oder Arbeitsschritte für die Prozessanlage durchführen. Die mindestens eine, mehrere oder alle Prozesseinrichtungen sind im Anlagenbereich rasterlos fixierbar. Die Prozesseinrichtungen sind dabei im Anlagenbereich frei wählbar anordenbar. Die Energieversorgung der Prozesseinrichtungen, insbesondere während des Betriebs der Prozessanlage und/oder der Prozesseinrichtungen, erfolgt kabellos. Dazu weisen die Prozesseinrichtungen beispielsweise Energiespeicher, wie Batterien und/oder Akkumulatoren auf. Alternativ kann die kabellose Energieversorgung der Prozesseinrichtungen in der Prozessanlage mittels einer induktiven Kopplung, kapazitiven Kopplung oder einer pneumatischen Energiespeicherung erfolgen. Dieser Ausgestaltung liegt die Überlegung zugrunde, eine wandlungsfähige Prozessanlage bereitzustellen, die eine Anordnung der Prozesseinrichtungen flexibel und anwendungsspezifisch ermöglicht.

Besonders bevorzugt ist es, dass die Prozessanlage die Energieliefereinheit umfasst. Die Energieliefereinheit ist zur kabellosen und/oder drahtlosen Kopplung mit der Prozesseinrichtung ausgebildet, wobei die Energieliefereinheit Energie an die Prozesseinrichtung übertragen kann. Die Übertragung der Energie an die Prozesseinrichtung erfolgt beispielsweise induktiv, kapazitiv und/oder basierend auf dem fotoelektrischen Effekt.

Weitere Vorteile, Wirkungen und Ausgestaltungen ergeben sich aus den beigefügten Figuren und deren Beschreibung. Dabei zeigen:
Figur 1 schematisch eine Prozessanlage als ein Ausführungsbeispiel der Erfindung;
Figur 2 Abschnitt einer Prozesseinheit aus Figur 1.

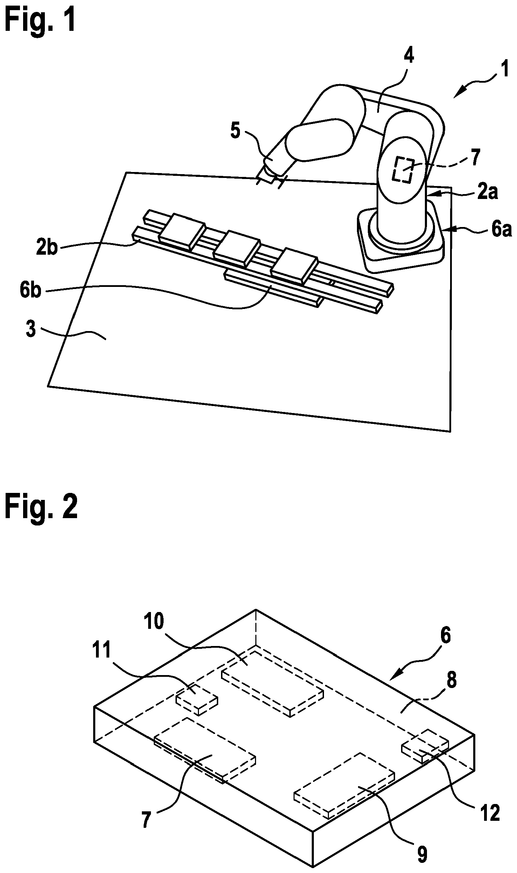

Figur 1 zeigt eine Prozessanlage 1. Die Prozessanlage 1 weist zwei Prozesseinrichtungen 2a und 2b auf. Die Prozesseinrichtungen 2a und 2b sind in dem Anlagenbereich 3 angeordnet. Die Prozesseinrichtungen 2a und 2b sind in dem Anlagenbereich 3 frei und/oder verschiebbar angeordnet. Mittels der Prozesseinrichtungen 2a und 2b kann ein Produkt bearbeitet, hergestellt und/oder vermessen werden. Die Prozessanlage 1 bildet somit eine Produktionsanlage, bei der ein Produkt hergestellt und/oder gehandhabt wird. Die Prozessanlage 1 kann beispielsweise eine Fertigungsanlage bilden.

Der Anlagenbereich 3 ist als ein flächiger Abschnitt hier dargestellt, insbesondere in Form des Bodens. Als Anlagenbereich 3 kann jedoch auch der über dem Boden liegende Bereich liegen und/oder verstanden werden, also der Bereich, in welchem die Prozesseinrichtungen 2a, 2b ihre Funktionen und/oder Arbeiten durchführen können.

Die Prozesseinrichtung 2a stellt hier einen Knickarmroboter dar. Die Prozesseinrichtung 2a weist einen Roboterarm 4 mit einem Endeffektor 5 auf. Mittels des Endeffektors 5 kann beispielsweise ein Produkt gegriffen und/oder gehalten werden. Durch die Bewegung des Endeffektors 5 mittels des Roboterarms 4 kann das Produkt translatorisch verschoben werden und im Speziellen auch rotiert und/oder gedreht werden. Der Roboterarm 4 zusammen mit dem Endeffektor 5 bildet beispielsweise eine aktive Einheit der Prozesseinrichtung 2a. Die Prozesseinrichtung 2a weist ferner eine Basis 6a auf. Die Basis 6a ist beispielsweise sockelförmig ausgebildet und weist einen Standflächenabschnitt und/oder Kontaktflächenabschnitt auf mit dem Boden und/oder dem Anlagenbereich 3 auf. Die Basis 6a kontaktiert flächig einen Abschnitt des Bodens. Die Basis 6 ist mit dem darüber liegenden Abschnitt der Prozesseinrichtung, also dem Roboterarm 4, verbunden, insbesondere mechanisch, datentechnisch und/oder elektrisch. Die Basis 6a dient insbesondere der Fixierung der Prozesseinrichtung 2a im Anlagenbereich, als Energie- und/oder Datenversorgung. Die Prozesseinrichtung 2a weist ferner eine Energieversorgungseinheit 7 auf. Die Energieversorgungseinheit 7 ist hier als eine Photovoltaik-Platte ausgebildet und wandelt Licht in Strom. Über diese Energieversorgungseinheit 7 kann die Prozesseinrichtung 2a mit Strom versorgt werden.

Die Prozesseinrichtung 2b bildet eine lineare Transporteinheit, wobei ein Produkt und/oder Gegenstände linear transportiert und/oder verschoben werden können. Der eigentliche Förder- und/oder translatorische Verschiebebereich ist auf einer Basis 6b angeordnet. Mittels dieser Basis 6b, welche insbesondere ähnlich und/oder gleich zur Basis 6a ausgebildet ist, kann die Prozesseinrichtung 2a im Anlagenbereich rasterlos fixiert werden und gegebenenfalls mit Energie und/oder Daten versorgt werden. Die Prozesseinrichtungen 2a und 2b und insbesondere auch die Basen 6a und 6b sind kabellos ausgebildet. Kabellos meint in diesem Zusammenhang, dass die Basen 6a und/oder Prozesseinrichtungen 2a nach außen untereinander und/oder mit der Prozessanlage 1 nicht über Kabel und/oder Drähte verbunden sind. Bei einem Verschieben der Prozesseinrichtungen im Anlagenbereich 3 gibt es somit keine Störkonturen durch Kabel und/oder Drähte, insbesondere auch keine Einschränkungen durch zu kurze Kabel und/oder Drähte.

Figur 2 zeigt eine Detailansicht einer Prozesseinrichtung 2, insbesondere, wie diese auch in Figur 1 dargestellt sind. Der Detailausschnitt zeigt die Basis 6, welche sockelförmig und als eine Platte ausgebildet ist. Die Basis weist ein Gehäuse 8 auf. Das Gehäuse 8 kann als ein Kunststoffgehäuse ausgebildet sein, beispielsweise um Gewicht zu reduzieren. Alternativ kann das Gehäuse ein Metallgehäuse ausbilden, insbesondere auch einen Bleiabschnitt aufweisen, sodass die Basis ein Gegengewicht, beispielsweise für schwere aktive Abschnitte einer Prozesseinrichtung, bildet. In dem Gehäuse 8 sind mehrere Komponenten angeordnet. Die Basis 6 weist eine Energieversorgungseinheit 7, einen Energiespeicher 9, eine Fixiereinheit 10 und eine Datenübertragungseinheit 11 auf. Ferner weist die Basis 6 und damit die Prozesseinrichtung 2 eine Steuereinheit 12 auf. Ferner kann eine elektromagnetische Schirmung vorgesehen sein, die Teile der Prozesseinrichtung und/oder die Steuereinheit 12 gegen Magnetismus zwischen den Anlagenteilen abschirmt.

Die Energieversorgungseinheit 7 ist zur Energieversorgung und/oder Energieabnahme ausgebildet. Beispielsweise bildet die Energieversorgungseinheit 7 eine induktiv koppelbare Energieversorgungseinheit. Dabei weist die Anlage 1 eine Energieliefereinheit auf, wobei die Energieliefereinheit koppelbar mit der Energieversorgungseinheit 7 ist. Beispielsweise koppelt die Energieversorgungseinheit 7 und die Energieliefereinheit induktiv oder kapazitiv, wobei über diese Kopplung elektrische Energie von der Prozessanlage 1 an die Prozesseinrichtung 2 kabellos übertragbar ist. Insbesondere ist es möglich, dass die Leistung und/oder die Energielieferung durch die Energieversorgungseinheit 7 und/oder durch die Kopplung geringer ist als eine benötigte Spitzenenergie bei der Durchführung der Prozessfunktion der Prozessanlage. Dies kann beispielsweise dadurch ausgeglichen werden, dass die benötigte Differenzenergie vom Energiespeicher 9 bezogen wird.

Der Energiespeicher 9 ist beispielsweise als eine Batterie und/oder als ein Akkumulator ausgebildet. beispielsweise wird der Energiespeicher 9 dann geladen, wenn die Energieübertragung durch die Kopplung von Energieversorgungseinheit 7 und Energieliefereinheit nicht vollständig zur Durchführung der Prozessfunktion gebraucht wird. Alternativ kann es auch vorgesehen sein, dass der Energiespeicher 9 als ein Speicher für pneumatische Energie, beispielsweise Druckluft, ausgebildet ist.

Die Basis 6 und damit die Prozesseinrichtung 2 weist eine Datenübertragungseinheit 11 auf. Mittels der Datenübertragungseinheit 11 sind beispielsweise Steuerdaten an die Prozesseinrichtung 2 übertragbar und/oder Daten von der Prozesseinrichtung 2 an die Umgebung übertragbar. Beispielsweise bildet die Datenübertragungseinheit 11 eine Infrarot- und/oder Funkschnittstelle. Zur Datenverarbeitung und/oder zur Steuerung der Prozesseinrichtung 2 weist die Basis 6 und damit die Prozesseinrichtung 2 eine Steuereinheit 12 auf. Mittels der Steuereinheit 12 ist die Prozesseinrichtung 2 steuerbar, einstellbar, in-Betrieb-nehmbar und/oder abschaltbar. Die Steuereinheit 12 ist vorzugsweise als ein Mikrochip oder eine Prozessoreinheit ausgebildet.

Die Basis 6 und damit die Prozesseinrichtung 2 weist ferner eine Fixiereinheit 10 auf. Mittels der Fixiereinheit 10 ist die Basis 6 und damit die Prozesseinrichtung 2 im Anlagenbereich 3 rasterlos fixierbar. Die Fixiereinheit ist beispielsweise ausgebildet, die Basis 6 und/oder die Prozesseinrichtung 2 mittels elektromagnetischer Wechselwirkung zu fixieren, beispielsweise, indem die Fixiereinheit 10 einen Elektromagneten bildet und der Boden des Prozessbereichs 3 aus einem magnetischen Material besteht. Durch Inbetriebnahme des Elektromagneten kann somit die Prozesseinrichtung 2 fixiert werden, durch ein Abschalten kann die Prozesseinheit verschoben werden und/oder neu positioniert werden. Alternativ und/oder ergänzend kann das Fixiersystem, beziehungsweise die Fixiereinheit 10, als eine Saugeinrichtung ausgebildet sein und die Basis 6 beziehungsweise die Prozessanlage 1 mittels einem Vakuum am Boden des Anlagenbereiches 3 fixieren.

## Patentansprüche

1. Prozesseinrichtung (2a, 2b) für eine wandlungsfähige Prozessanlage (1),
wobei die Prozessanlage (1) einen Anlagenbereich (3) aufweist, wobei die Prozesseinrichtung (2a, 2b) im Anlagenbereich (3) reversibel positionierbar und/oder orientierbar ist und zur Durchführung einer Prozessfunktion ausgebildet ist,
mit eine Fixiereinheit (10) zur rasterlosen Fixierung der Prozesseinrichtung (2a, 2b) im Anlagenbereich (3),
**gekennzeichnet durch** eine Energieversorgungseinheit (7) zur kabellosen Energieversorgung der Prozesseinrichtung (2a, 2b).

2. Prozesseinrichtung (2a, 2b) nach Anspruch 1, **dadurch gekennzeichnet, dass** die Prozessanlage (1) eine Energieliefereinheit zur Energieübertragung an die Prozesseinrichtung und kabellosen Kopplung mit der Energieversorgungseinheit (7) aufweist.

3. Prozesseinrichtung (2a, 2b) nach Anspruch 2, **dadurch gekennzeichnet, dass** die Energieübertragung eine induktive Energieübertragung umfasst.

4. Prozesseinrichtung (2a, 2b) nach Anspruch 2 oder 3, **dadurch gekennzeichnet, dass** die Energieübertragung eine fotoelektrische Energieübertragung umfasst.

5. Prozesseinrichtung (2a, 2b) nach einem der vorherigen Ansprüche, **dadurch gekennzeichnet, dass** die Energieversorgungseinheit (7) und/oder die Prozesseinrichtung (2a, 2b) einen Energiespeicher (9) aufweist.

6. Prozesseinrichtung (2a, 2b) nach Anspruch 5, **dadurch gekennzeichnet, dass** der Energiespeicher (9) einen Druckluftspeicher aufweist.

7. Prozesseinrichtung (2a, 2b) nach Anspruch 5 oder 6, **dadurch gekennzeichnet, dass** der Energiespeicher (9) zur Speicherung elektrischer Energie ausgebildet ist.

8. Prozesseinrichtung (2a, 2b) nach einem der vorherigen Ansprüche 5 bis 7, **dadurch gekennzeichnet, dass** der Energiespeicher (9) zur Speicherung mechanischer und/oder kinetischer Energie ausgebildet ist.

9. Prozesseinrichtung (2a, 2b) nach einem der vorherigen Ansprüche, **dadurch gekennzeichnet, dass** die Fixiereinheit (10) zur elektrischen, magnetischen und/oder elektromagnetischen Fixierung der Prozesseinrichtung (2a, 2b) im Analagenbereich (3) ausgebildet ist.

10. Prozesseinrichtung (2a, 2b) nach einem der vorherigen Ansprüche, **dadurch gekennzeichnet, dass** die Fixiereinheit (10) zur mechanischen und/oder vakuumbasierten Fixierung ausgebildet ist.

11. Prozesseinrichtung (2a, 2b) nach einem der vorherigen Ansprüche, **gekennzeichnet durch** eine Datenübertragungseinheit (11) zum drahtlosen Austausch von Daten zwischen der Prozesseinrichtung (2a, 2b) und der Prozessanlage (1).

12. Prozesseinrichtung (2a, 2b) nach einem der vorherigen Ansprüche, **dadurch gekennzeichnet, dass** die Prozessfunktion einen physikalischen, mechanischen und/oder produktionstechnischen Arbeitsschritt umfasst.

13. Prozesseinrichtung (2a, 2b) nach einem der vorherigen Ansprüche, **dadurch gekennzeichnet, dass** die Prozesseinrichtung (2a, 2b) ein Arbeits- und/oder Produktionsmodul bildet.

14. Prozessanlage (1) mit mindestens einer Prozesseinrichtung (2a, 2b) nach einem der vorherigen Ansprüche, wobei die Prozesseinrichtung (2a, 2b) rasterlos im Anlagenbereich (3) fixierbar ist.

15. Prozessanlage (1) nach Anspruch 14, **gekennzeichnet durch** mindestens eine Energieliefereinheit zur kabellosen Kopplung mit der Prozesseinrichtung (2a, 2b).
